# EUROPEAN PATENT APPLICATION

(11) **EP 4 707 137 A1**
(43) Date of publication of application: **11.03.2026**
(21) Application number: 25201153.1
(22) Date of filing: 09.09.2025
(51) Int. Cl.: B62D 49/02, B62D 49/06, B62D 55/06, E02F 3/36, B62D 49/04

(54) **A QUICK-COUPLING SYSTEM FOR A REPLACEABLE WORKING ASSEMBLY OF A SNOW GROOMING VEHICLE**

(30) Priority: 10.09.2024 IT 202400020140
(71) Applicant: PRINOTH S.p.A., 39049 Vipiteno (BZ) (IT)
(72) Inventor: GOGL, Andreas, 39049 VIPITENO (BZ) (IT)
(74) Representative: Studio Torta S.p.A.

(57) **Abstract**

A snow grooming vehicle for refining ski slopes; wherein the snow grooming vehicle comprises: a main frame to laterally support tracks and a cab at the top; a support frame coupled to the front or to rear of the main frame; a working assembly configured for refining the surface; wherein a pre-existing coupling interface is provided between the support frame and the working assembly, formed by corresponding portions of the support frame and the working assembly configured to allow the selective coupling of the working assembly with the support frame; wherein the snow grooming vehicle further comprises a quick-coupling assembly at the pre-existing coupling interface between the support frame and the working assembly to selectively couple the working assembly with the support frame, so that the coupling between the support frame and the working assembly is no longer direct but mediated by the quick-coupling assembly, which forms a new coupling interface.

## Description

### Cross reference to related Applications

This patent application claims priority from Italian patent application no. 102024000020140 filed on September 10, 2024, the entire disclosure of which is incorporated herein by reference.

### Technical Field

The reference to the technical field for the present invention is the technical field of snow grooming vehicles, namely, tracked vehicles configured for refining snow-covered ski slopes. The term "refine" refers to performing given actions on the surface as the vehicle advances in order to shape the snowpack into a desired shape. These vehicles comprise a main frame, which supports the tracks, and a cab from where a driver operates the vehicle. A support frame is coupled to the main frame at the front and/or rear, which supports a corresponding working assembly comprising at least one device configured to work the surface. In this technical field, the working assembly may be a tiller assembly comprising a tiller configured to pre-till the snowpack and a blade configured to model the snow into a specific shape. The working assembly can be disassembled after work or replaced during operation. In said context, the present invention will address the problem of how to optimize the coupling step of the working assembly with the main frame to make said step quick, safe, and automated. Specifically, the present invention will address the problem of how to provide currently used vehicles with said functionality without the need for machining interventions to modify the coupling parts (support frame and working assembly).

### State of the Art

As previously indicated, the present invention relates to the technical field of snow grooming vehicles, namely, tracked vehicles used for preparing or refining snow-covered ski slopes. In general, a snow grooming vehicle for preparing and refining snowy ski slopes comprises a main frame (or platform) to support tracks mounted on opposite sides of the vehicle and a centrally mounted cab for the driver, which provides the driver with vehicle control tools. Based on said general structure, a vehicle of this type for preparing and refining snowy ski slopes typically comprises one or more specific working assemblies attached to the front and/or rear of the frame. In the snow grooming field, a rear tiller assembly configured for refining the snowpack and a front shovel configured to move snow masses along the ski slopes are typically provided. Construction details of said working assemblies found in snow grooming vehicles will not be provided herein since they are well known to those skilled in the art.

It is common practice to provide that the front or rear working assembly, for example the aforementioned tiller assembly, can assume two different configurations relative to the main frame of the vehicle. Specifically, the tiller assembly of the snow grooming vehicle can be selectively switched between two configurations or positions. In a first position, known as the working position, the working assembly is arranged so as to acts against the surface (or snow) as the vehicle advances. In a second position, known as the rest position, the working assembly is arranged so not act against the surface (or snow) as the vehicle advances. Since the transition from the first to the second position occurs by raising the working assembly, the first position can also be defined as the lowered position and the second as the raised position. To selectively switch between one position and the other, the vehicle comprises a support frame placed between the working assembly and the main frame, in which the support frame is movable relative to the main frame. The possible movements and how the support frame is connected to the main frame are matters known to those skilled in the art.

It is known that the working assembly is coupled in a releasable manner with the corresponding support frame. This allows the vehicle to move more easily when not performing work on the surface, and it is also possible to replace one working assembly with a different one as needed. The coupling steps of a working assembly with the corresponding support frame comprise the following steps. The initial condition refers to a working assembly of considerable size and weight, resting on the ground or on a fixed support, and a tracked vehicle with a free support frame. In this condition, the driver, from the operating cab, moves the vehicle to perform approaching movements towards the working assembly. The object of said approaching step of the vehicle towards the working assembly is to bring the support frame into a coupling position proximal to the working assembly where coupling can occur. Once said reciprocal coupling position has been reached, the next step consists in coupling the support frame and the working assembly to one another. Once this coupling step is complete, the working assembly is integral with the support frame, and the driver in the cab can operate the vehicle and the working assembly to perform the desired operation on the surface.

Currently, two different methods are known for coupling the working assembly with the support frame. According to a first known technique, once the frame has reached the coupling position, the driver must leave the cab, exit the vehicle, and manually operate the reciprocal coupling devices on the support frame and on the working assembly. Similarly, releasing the working assembly from the support frame also requires manual actions performed by the driver on the coupling devices provided on the support frame and on the working assembly. Clearly, said known practice has significant disadvantages because it requires manual actions delegated to the driver and lengthy assembly times.

EP4029994 describes a second known technique and addresses the problem of how to bypass the aforementioned manual coupling steps of the working assembly with the support frame. EP4029994 describes for providing the support frame with a quick-coupling device, actuated electrically or hydraulically, configured to couple to the working assembly, where the coupling device can be operated by the driver from the comfort of the cab. The prior art according to EP4029994 therefore does not require the driver to perform manual coupling actions, but only to activate the coupling device once the mutual coupling position between the support frame and the working assembly has been reached. For example, EP4029994 provides a form fitting system wherein movable rods mounted on the support frame are actuated to move from a retracted position to an extended position, for entering corresponding holes in the working assembly.

The solution described in EP4029994, however, is not without drawbacks. Indeed, the solution described in EP4029994 requires preliminary machining steps to be performed both on the support frame, which must be modified to house the quick-coupling device, and on the working assembly, which must be modified to allow the coupling with said quick-coupling device. Therefore, said solution is not suitable for implementation on snow grooming vehicles and corresponding working assemblies already in use.

### General Description of the Invention

Starting from the prior art described in the previous chapter, the primary object of the present invention is to provide a quick-coupling system for a snow grooming vehicle wherein the quick-coupling system is configured to perform quick and safe coupling/release between the support frame of the snow grooming vehicle and a front and/or rear working assembly (namely, a tiller assembly) and wherein the quick-coupling system can also be integrated into snow grooming vehicles already in use without requiring modifications to the coupling components (support frame and working assembly).

The aforementioned object is achieved by providing a snow grooming vehicle as claimed in the appended claims.

A snow grooming vehicle according to the present invention is a vehicle that comprises:
- a main frame, preferably configured to laterally support tracks and at the top a cab where a driver can operate the vehicle;
- a support frame coupled to the front or to the rear of the main frame (preferably movable relative to the main frame);
- a working assembly configured for refining the snowpack as the vehicle advances.

A pre-existing coupling interface is provided between the support frame and the working assembly, namely, corresponding portions of the support frame and of the working assembly are configured to allow selective coupling with (or release from) of the working assembly and the frame.

In said context, the present invention proposes to use an innovative quick-coupling assembly at the pre-existing coupling interface between the support frame and the working assembly so that the coupling thereof is no longer direct but mediated by the new quick-coupling assembly, which forms a new coupling interface. To this end, the quick-coupling assembly comprises a first coupling body and a second coupling body configured to be coupled to the support frame and the working assembly at the respective portions of said pre-existing coupling interface, respectively.

Once the first coupling body and the second coupling body have been coupled to the support frame and to the working assembly as described above and once the parts have been brought into the coupling position, the quick-coupling assembly is configured to selectively couple the working assembly with the support frame. In other words, the coupling assembly can be switched between:
- a first configuration, which allows (namely, does not hinder) the support frame and the first coupling body to reach a mutual coupling position (proximal) with respect to the working assembly to be mounted with the second coupling body; and
- a second configuration, in which, starting from the mutual coupling position, the first and second coupling bodies couple with one another so that the working assembly can be moved and operated by the vehicle driver.

Obviously, it is possible to envision configurations in which the vehicle comprises a front support frame and a rear support frame to couple to a front working assembly and to a rear working assembly. In this case, a front quick-coupling assembly and a rear quick-coupling assembly are provided.

Preferably, the coupling between the first and second coupling bodies is of the type operable directly from the cab. According to one embodiment, the first coupling body mounted on the support frame comprises telescopic rod elements (the active part of the coupling assembly) that can be moved from a retracted configuration (wherein the latter do not limit or hinder the approach step to the working assembly) to an extended position in which, in the coupled position, the same penetrate seats or holes (the passive part of the coupling assembly) obtained in the second coupling body mounted on the working assembly. The active part of the coupling assembly can be actuated, for example, electrically or hydraulically, in which electricity or oil is fed to the first body by passing through the support frame.

Preferably, a system can be provided to lock the coupling assembly in the working configuration, and this lock can be mechanical or hydraulic. Preferably, the driver can use appropriate controls in the cab to deactivate said lock during the release steps of the working assembly.

Preferably, between the first coupling body and the second coupling body a quick-coupling interface is provided configured to transfer a hydraulic working fluid (at low or high pressure depending on the object), a cooling fluid, and/or a low-voltage electrical signal and/or a high-voltage electrical power signal to the working assembly. This fluid and/or electrical signal reaches the working assembly by passing in series through the support frame, the first coupling body, and the second coupling body.

### List of the Figures

Further features and advantages of the present invention will be made clear from the following description of a non-limiting embodiment thereof, with reference to the figures in the attached drawings, wherein:
- Figure 1 shows a schematic side elevation view of a snow grooming vehicle for refining ski slopes;
- Figure 2 is an enlarged perspective view of some components of the snow grooming vehicle of Figure 1; the rest of the vehicle has been omitted for convenience;
- Figures 3 and 4 show two different positions of the tiller assembly relative to the main frame, a lowered working position and a raised rest position, respectively;
- Figures 5-8 show a schematic illustration of an example of an embodiment of the present invention;
- Figures 9-10 show a schematic illustration of a detail of an example of an embodiment of the present invention.

### Description of an embodiment of the invention

With reference to the figures listed above, a preferred embodiment of the present invention, namely, an innovative snow grooming vehicle, will be described in the following.

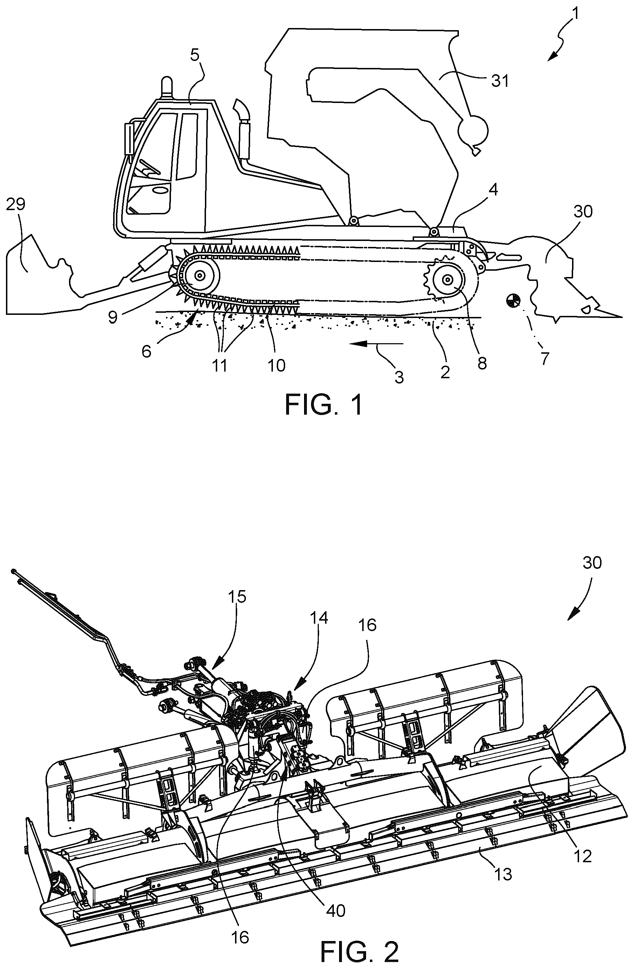

Referring to Figure 1, said figure shows a schematic view of a snow grooming vehicle 1, namely, a preferred example of a tracked vehicle that can be provided with the technical solution described in the present invention to improve the assembly steps of a front or rear working assembly. Said snow grooming vehicle 1 is a tracked vehicle and is motorized to move along the surface 2 in a forward direction 3. Typically, during normal use of the snow grooming vehicle 1, the surface is a snowpack, but the surface could be a different contact surface, for example, an icy or hard surface or other. Naturally, the forward direction 3 may also be different from that indicated, namely, for example, the snow grooming vehicle 1 can also move in reverse. The snow grooming vehicle 1 of Figure 1 comprises a rear tiller assembly 30 (claimed as a "working assembly") configured to work the snowpack 2, a front shovel 29 (which can be considered a second working assembly) for moving masses of snow, and a winch assembly 31. The snow grooming vehicle 1 of Figure 1 further comprises a main frame 4, a cab 5 for the driver mounted on the frame 4, and two tracks 6 mounted on opposite sides of the frame 4. Each track 6 comprises a plurality of belts 10 conveyed between a front wheel 9 and a rear wheel 8. Furthermore, each track 6 comprises a plurality of transverse bars 11 fixed to the belts 10. The movement direction of the belts 10 defines the direction that will be referred to in the following of the description as the longitudinal direction 3, while the rotation axes of the wheels 8, 9 define the transverse direction 7, orthogonal to the longitudinal direction 3.

Figure 2 is an enlarged perspective view of some components of the snow grooming vehicle of Figure 1. In particular, Figure 2 shows the tiller assembly 30 and parts of the vehicle 4. In said example, the tiller assembly comprises a frame 40 that supports a tiller device 12 and a blade device 13. Further construction details of the tiller assembly 30 are omitted since being known to those skilled in the art and because the composition of the tiller assembly 30 does not constitute a limitation for the present invention. In other words, the tiller assembly can be of any type and can be a working assembly different from a tiller assembly. The frame 40 of the tiller assembly 30 of Figure 2 is configured to be selectively connected to a lifting frame 14 (claimed as the "support frame") attached to the main frame 4 of the vehicle 1 on the opposite side to the blade 13. The reference 15 denotes a lifting arm 15, namely, a device configured to lift the support frame 14 and therefore also the tiller assembly 30. In this example, a pair of stabilizing devices 16 is provided between the lifting frame 14 and the tiller assembly 30. In Figure 2, the rest of vehicle 1 has been omitted for convenience.

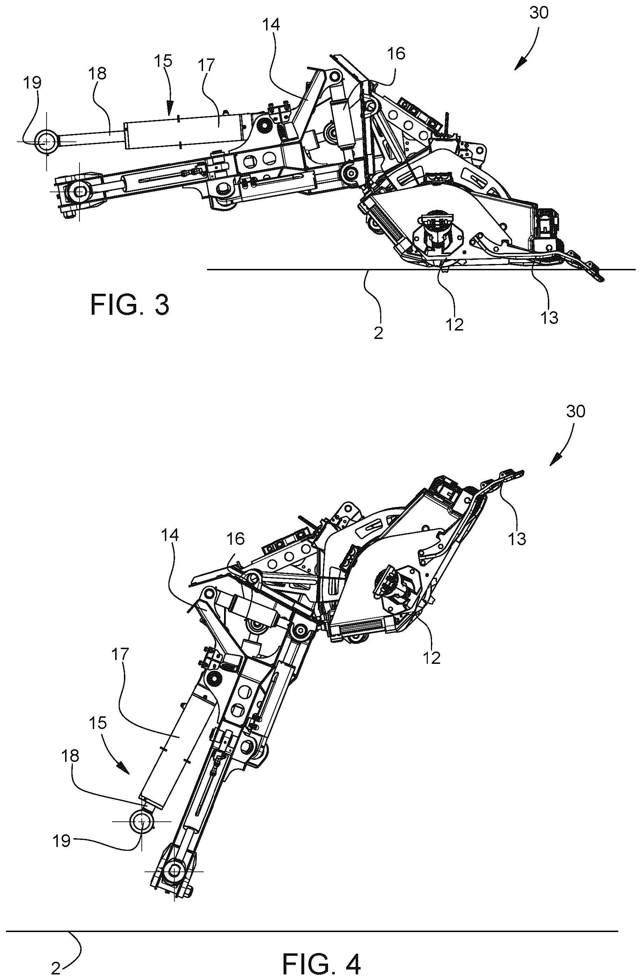

Figures 3 and 4 show two different positions of the tiller assembly 30 with respect to the vehicle, namely, with respect to the surface 2, due to the movement of the support frame 14. Respectively, Figure 3 shows a lowered working position of the tiller assembly 30 in which the tiller 12 and the blade 13 act against the surface 2 (namely, the snowpack). Figure 4 shows a raised rest position of the tiller assembly 30 in which the tiller 12 and the blade 13 are in a position so to not interact with the surface 2. In said example, the lifting device 15 is a hydraulic actuator configured to lift the support frame 14 by rotation around an axis parallel to the transverse direction 7. According to Figure 3, the lifting device 15 comprises a cylinder 17 in which a piston 18 slides and is actuated by a fluid fed into the cylinder. The lifting rotation axis of the tiller assembly 30 corresponds to the coupling point between the lifting device 15 and the main frame 4. Said point is schematized by reference 19. As shown in Figure 4, the piston 18 is most deeply inserted into the cylinder 17 due to its actuation and to the lifting of the tiller assembly 30.

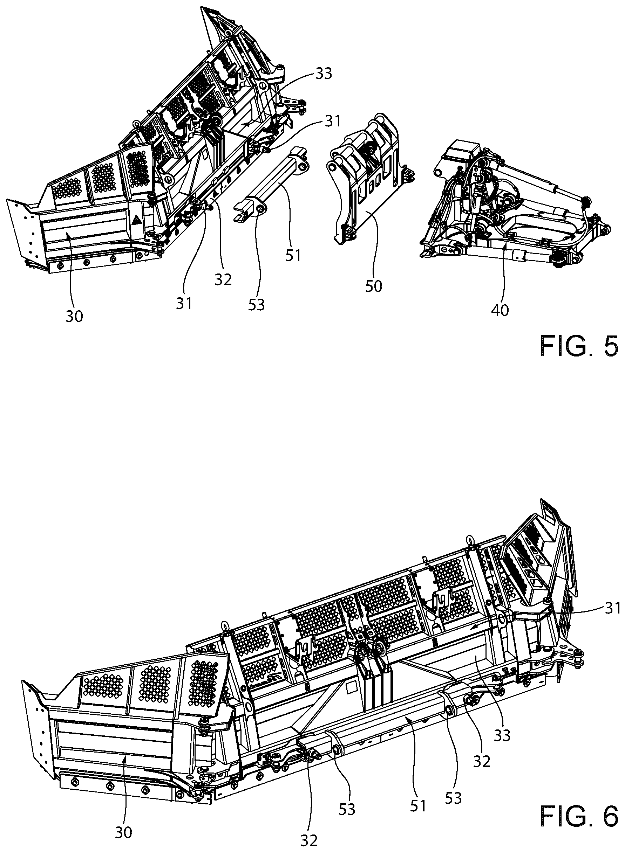

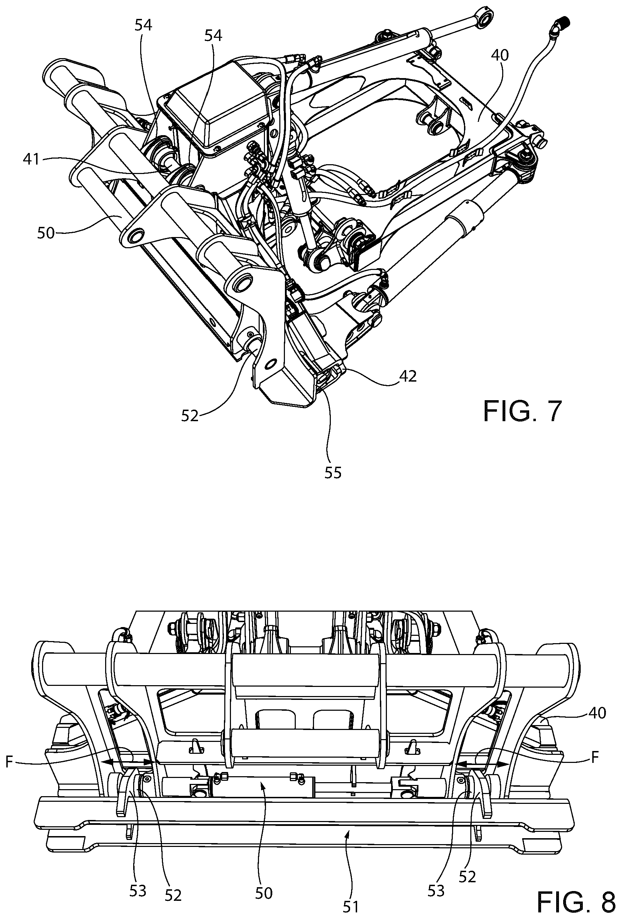

Figure 5 shows an exploded view of the vehicle (schematized by the support frame 40 only) and of the working assembly 30. In this figure, the reference 31 indicates standard bolt-type coupling elements that are provided on the rear face 32 of the frame 33 of the working assembly 30 in symmetrical positions with respect to the centreline and which extend towards the support frame 40. Said bolts 31 represent the first original interface for coupling the working assembly 30 with the support frame 40 (namely, the means that would be used in the absence of the invention to connect the working assembly and the frame). Figure 5 shows how, according to the present invention, the new quick-coupling assembly comprising a first body 50 and a second body 51 is interposed between the working assembly 30 and the support frame 40, wherein the first body 50 is on the side of the support frame 40 and the second body 51 is on the side of the working assembly 30. As indicated in the general description chapter of the present invention, the first body 50 and the second body 51 are configured to couple to the support frame and to the working assembly without requiring modifications to said components. In this regard, Figure 6 shows how in this example the second body 51 is in the shape of a bar that runs transversely between the bolts 32 and is constrained to the rear face 33 of the frame 31 of the working assembly precisely at the bolts 32. Figure 6 shows how the bar 51 substantially at the fixing ends to the bolts 32 has two protruding perforated lips 53 to obtain circular seats with an axis along the transverse direction. Figure 7 similarly shows how the first body 50 is also configured to couple to the support frame 40 without requiring the latter to be modified. In this example, the first body 50 comprises a hooked upper portion 54 configured to couple to a transverse pin 41 of the support frame 40, in which said transverse pin 41 forms the transverse rotation axis to tilt the working assembly 30 upwards (when obviously coupled to the rest of the structure). The first body 50 comprises, furthermore, shaped lateral lower portions 55 configured to couple to corresponding shaped lateral lower portions 42 of the support frame 40.

Figure 8 shows the coupling steps of the first body 50 with the second body 51 after their preliminary coupling with the support frame 40 and the working assembly 30, respectively. In particular, as shown in this example, the first coupling body 50 comprises transverse telescopic rod elements 52 as an active part of the coupling assembly. Said transverse telescopic rods 52 are movable between a retracted configuration, wherein the latter do not limit or hinder the approach step to the working assembly 30, and an extracted position wherein, in the coupling position, the same penetrate the seats or holes 53 (passive part of the coupling assembly) obtained in the second coupling body 51. The arrows F in Figure 8 exemplify said transverse movement of the telescopic rods 52 entering and exiting the holes 53. When the rods 52 engage the holes 53 the second body 51 is mechanically coupled to the first body 50 and therefore the working assembly 30 is mechanically coupled to the support frame 40.

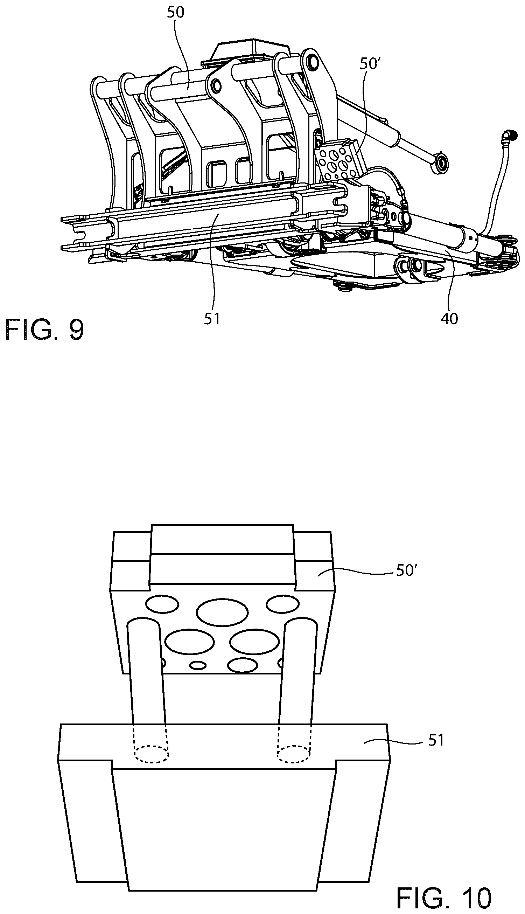

Finally, Figures 9 and 10 show an embodiment wherein the coupling between the first body 50 and the second body 51 is not only mechanical but also hydraulic and electrical. In fact, in said example, an interface is formed between the first body 50 and the second body 51 with corresponding facing coupling plates 50' and 51' on the first body 50 and on the second body 51, respectively, which are configured to allow the passage of cooling fluid and/or oil for component actuation and/or low and/or high voltage electrical signals. In this way, said fluid and/or electrical signal reaches the working assembly 30 from the support frame 40 passing in series through the first connecting body and the second connecting body.

Finally, it is evident that modifications and alternatives may be made to the invention described herein without departing from the scope of the appended claims.

## Claims

1. A snow grooming vehicle (1) for refining ski slopes; wherein the snow grooming vehicle (1) comprises:
- a main frame (4) preferably configured to laterally support tracks (6) and at the top a cab (5) where a driver can operate the vehicle (1);
- a support frame (40) coupled to the front or to the rear of the main frame (4);
- a working assembly (30) configured for refining the surface as the vehicle (1) advances when needed;
wherein between the support frame (40) and the working assembly (30) a pre-existing coupling interface is provided formed by corresponding portions of the support frame (40) and the working assembly (30) configured to allow the selective coupling of the working assembly (30) with the support frame (40);
**characterized in that** the snow grooming vehicle (1) further comprises:
- a quick-coupling assembly (50, 51) at the pre-existing coupling interface between the support frame (40) and the working assembly (30) to selectively couple the working assembly (30) to the support frame (40); wherein the quick-coupling assembly comprises a first coupling body (50) and a second coupling body (51) coupled respectively to the support frame (40) and to the working assembly (30) at the respective portions of said pre-existing coupling interface so that the coupling between the support frame (40) and the working assembly (30) is no longer direct but mediated by the quick-coupling assembly that forms a new coupling interface.

2. The vehicle as claimed in claim 1, wherein the coupling of the first coupling body (50) and the second coupling body (51) with respectively the support frame (40) and the working assembly (30) is a releasable type coupling.

3. The vehicle as claimed in claim 1 or 2, wherein the first coupling body (50) comprises telescopic rod elements (52) as an active part of the coupling assembly that are movable between a retracted configuration, wherein the latter do not limit or hinder the approach step to the working assembly to be coupled, and an extracted position wherein, in the coupling position, the same penetrate seats or holes (53) obtained in the second coupling body as passive part of the coupling assembly.

4. The vehicle as claimed in claim 3, wherein the actuation of the motion of the telescopic rod elements (52) is a hydraulic type actuation.

5. The vehicle as claimed in any one of the preceding claims, wherein the coupling assembly is of the type operable by the driver directly from the cab (5).

6. The vehicle as claimed in any one of the preceding claims, wherein a locking system for the coupling assembly is provided in the working configuration wherein it binds the working assembly (30) to the support frame (40).

7. The vehicle as claimed in claim 6, wherein the locking system is a mechanical or hydraulic type locking system.

8. The vehicle as claimed in claim 7, wherein a control is provided in the cab (5) to deactivate the locking system.

9. The vehicle as claimed in any one of the preceding claims, wherein between first coupling body (50) and a second coupling body (51) a quick-coupling interface (50', 51') is provided to transfer a cooling fluid and/or a low-voltage electrical signal and/or a high-voltage electrical power signal to the working assembly (30).

10. The vehicle as claimed in any one of the preceding claims, wherein the working assembly (30) comprises a tiller (12) and a refining blade (13).
